# EUROPÄISCHE PATENTSCHRIFT

(11) **EP 0 548 528 B1**
(45) Veröffentlichungstag und Bekanntmachung des Hinweises auf die Patenterteilung: **02.08.1995**
(21) Anmeldenummer: 92119423.9
(22) Anmeldetag: 13.11.1992
(51) Int. Cl.: A63G 25/00, A63G 21/12

(54) **Freizeitanlage**
Amusement device
Dispositif de divertissement

(30) Priorität: 22.11.1991 DE 4138442
(43) Veröffentlichungstag der Anmeldung: 30.06.1993
(73) Patentinhaber: Wiegand, Josef, D-36169 Rasdorf (DE)
(72) Erfinder: Menz, Peter, W-6418 Hünfeld (DE); Wiegand, Josef, W-6419 Rasdorf (DE)
(74) Vertreter: Schlagwein, Udo, Dipl.-Ing.

(56) Entgegenhaltungen:
- DE-A- 2 917 074
- DE-C- 805 743
- DE-U- 9 114 565
- NL-C- 81 566
- US-A- 2 081 261

## Beschreibung

Die Erfindung betrifft eine Freizeitanlage mit zumindest einem auf einer Fahrbahn fahrbaren, vierrädrigen, von einem Elektromotor angetriebenen Wagen, bei dem zur Energieversorgung des Elektromotors der Wagen über einen Stromabnehmer mit einer entlang der Fahrbahn verlaufenden, elektrischen Schleifleitung verbunden ist.

Eine Freizeitanlage der vorstehenden Art ist Gegenstand der DE-C-805 743. Das in dieser Schrift dargestellte Fahrzeug wird primär von einem Fahrer mittels eines Lenkrades gelenkt. Nur wenn es mit seitlichen Fühlern gegen Schrammborde der Fahrbahn gelangt, erfolgt ein vom Fahrer unabhängiger Lenkeinschlag der Vorderräder weg vom jeweiligen Schrammbord.

Die DE-A-29 17 074 zeigt auch schon eine allgemein unter dem Begriff "Sommerrodelbahn" bekannte Freizeitanlage, welche einen vierrädrigen Wagen mit selbstlenkender Vorderachse mit muldenförmiger Fahrbahn zeigt. Bei dem bekannten Wagen sind die Vorderräder an einem starren Achskörper gelagert, der seinerseits um einen in Fahrzeugmitte schräg von oben nach vorn unten ausgerichteten Achsbolzen pendelnd gelagert ist. Dadurch lenkt die Vorderachse selbsttätig nach rechts, wenn ihr linkes Vorderrad, und selbsttätig nach links, wenn ihr rechtes Vorderrad durch die Wölbung der Fahrbahn angehoben wird. Auf diese Weise hat der Wagen zwangsläufig die Tendenz, zum tiefsten Bereich der rinnenartigen Fahrbahn zu steuern, und es stellt sich in Kurven ein Gleichgewicht zwischen der ihn nach außen bewegenden Fliehkraft und der Steuertendenz zum tiefer gelegenen Fahrbahnbereich ein. Weiterhin ermöglicht es die pendelnde Achsausbildung dem Fahrer, sich zum Balanceausgleich mit dem Wagen in die Kurve zu legen. Nachteilig bei den bekannten Freizeitanlagen ist es, daß sie wegen der Notwendigkeit eines Gefälles nur in den Bergen einsetzbar sind. Für die Ebene gibt es keine vergleichbaren Freizeitanlagen.

Die US-A-2,081,261 zeigt eine Freizeitanlage mit einer muldenförmig ausgebildeten Fahrbahn, auf der motorisch angetriebene Wagen zu fahren vermögen, welche eine selbstlenkende Vorderachse aufweisen und bei denen die Räder durch Federn in eine Geradeausstellung vorgespannt sind. Die Räder sind hierzu vergleichbar wie bei einem Kraftfahrzeug einzeln schwenkbar gelagert. Die Fahrzeuge nach dieser Patentschrift sollen bei Benutzung das Gefühl vermitteln, in einem Zug zu fahren.

Der Erfindung liegt das Problem zugrunde, eine Freizeitanlage der eingangs genannten Art so auszubilden, daß sie in der Ebene eingesetzt werden kann, ihren Benutzern jedoch das Gefühl einer Schlittenfahrt vermittelt.

Dieses Problem wird erfindungsgemäß dadurch gelöst, daß die Fahrbahn muldenförmig ausgebildet ist und die Vorderachse des Wagens einen um eine auf der Fahrzeugmittellinie angeordnete, zumindest in etwa senkrecht ausgerichtete Drehachse schwenkbaren Drehschemel hat, an dessen äußeren Enden jeweils ein Vorderrad befestigt ist und dessen Drehachse gegenüber den Vorderrädern nach vorn versetzt ist.

Durch die erfindungsgemäße Ausstattung entsteht ein bobschlittenartiges, selbstlenkenden Fahrzeugs, welches durch seinen Elektromotor auch auf einer Fahrbahn ohne Gefälle ähnlich wie auf einer Bobbahn fahren kann. Da der erfindungsgemäße Wagen selbstlenkend ist, fährt er nicht wie ein schienengebundenes Fahrzeug auf einer genau festgelegten Linie, sondern ähnlich wie ein Schlitten in erster Linie in Abhängigkeit von der Kurvengeschwindigkeit mehr oder weniger weit am kurvenäußeren Rand der Fahrbahn. Das Fahrzeug der erfindungsgemäßen Freizeitanlage vermittelt deshalb nicht das Gefühl einer Go-kart- oder Schienenfahrzeugfahrt, sondern das einer Schlittenfahrt. Da der Elektromotor über einen Stromabnehmer und eine Schleifleitung mit elektrischer Energie versorgt wird, lassen sich ausreichend hohe Antriebsleistungen erzielen, um die für Bobfahrten charakteristischen, hohen Fahrgeschwindigkeiten zu erreichen. Da die Vorderachse des Wagens einen gezogenen Drehschemel aufweist, ergibt es sich, daß bei einer Schräglage des Wagens um seine Längsachse der Wagen mit der Drehachse des Drehschemels sich selbsttätig in Richtung der Schräglage verschiebt, während die Vorderräder zunächst ihre Lage behalten. Das führt zu einem Verschwenken des Drehschemels derart, daß ein Lenkeinschlag in Richtung des Gefälles eintritt. Der Wagen hat deshalb die Tendenz, immer in den tiefsten Bereich der rinnenförmigen Fahrbahn zu steuern.

Der Wagen gelangt nach einer Kurvenfahrt rasch wieder im mittleren Bereich der rinnenförmigen Fahrbahn in Geradeausfahrt, wenn der Drehschemel durch zumindest eine Feder in eine Geradeausfahrt herbeiführende Mittellage vorgespannt ist.

Konstruktiv besonders einfach ist der Wagen gestaltet, wenn der Drehschemel T-förmig ausgebildet ist und von seinem Steg hinter der Drehachse eine Zugfeder zu einem festen Punkt in der Nähe der Fahrzeugmittellinie führt.

Das Fahrverhalten des Wagens entspricht in einem ganz besonders großen Maße den Bewegungen eines Bobschlittens, wenn gemäß einer anderen Weiterbildung der Erfindung die Vorderachse einen starren, die beiden Vorderräder tragenden Achskörper hat, welcher schwenkbar auf einem auf der Fahrzeugmittellinie schräg angeordneten Achsbolzen befestigt ist, welcher in Bezug auf eine Senkrechte mit seinem oberen Ende nach rückwärts geneigt verläuft und wenn der Achsbolzen mit dem Achskörper räumlich hinter der Drehachse an dem Drehschemel befestigt ist. Eine solche Vorderachse lenkt durch den Fahrschemel und durch den schräg nach vorn unten geneigten Achsbolzen. Es wurde also das erfindungsgemäße Selbstlenkprinzip mit einem anderen Selbstlenkprinzip kombiniert. Durch eine solche kombinierte Achse wird zudem erreicht, daß der Wagen nach einer Kurvenfahrt rasch wieder aus seiner Schräglage herausgelangt. Der Fahrer erhält durch die kombinierte Achse die Möglichkeit, durch Gewichtsverlagerung den Wagen in die jeweils optimale Schräglage zu bringen und ihn auf der Ideallinie durch die Kurven zu fahren.

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben. In ihr zeigen die
- Fig.1: eine schematische Seitenansicht eines Teilbereiches der erfindungsgemäßen Freizeitanlage,
- Fig.2: einen Querschnitt durch die Freizeitanlage nach Figur 1,
- Fig.3: eine schematische perspektivische Ansicht der Vorderachse eines Wagens nach der Erfindung.

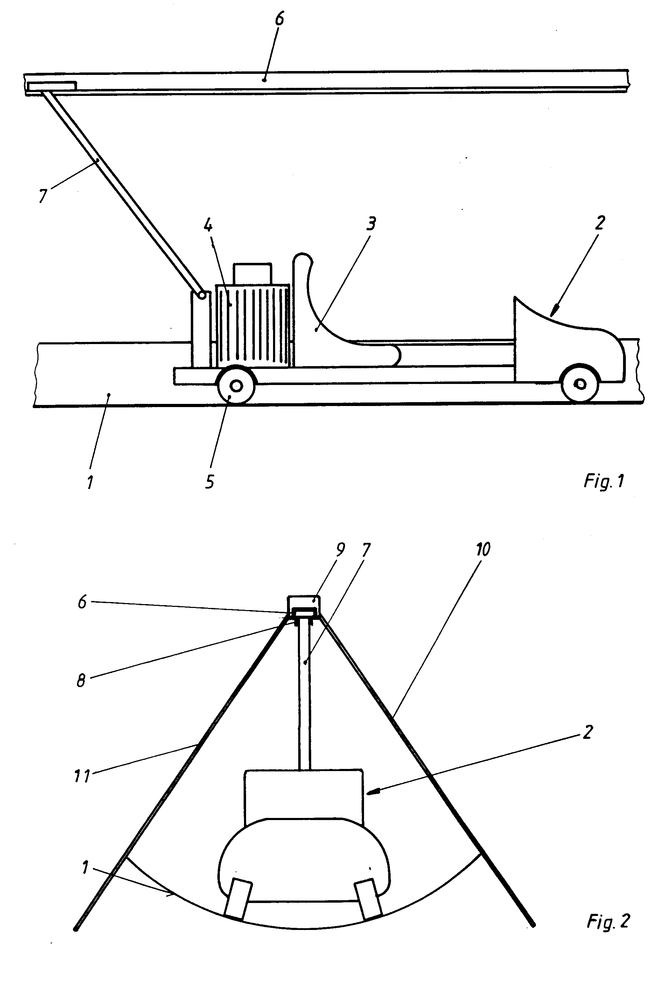

Die Figur 1 zeigt eine Fahrbahn 1, die aus nichtrostendem Stahl gefertigt sein kann und ähnlich einer Bobbahn rinnenförmig ausgebildet ist. Auf dieser Fahrbahn 1 vermag ein Wagen 2 zu fahren. Dieser hat hinter einem Sitz 3 einen Elektromotor 4, welcher Hinterräder 5 des Wagens 2 anzutreiben vermag. Die Energieversorgung des Elektromotors 4 erfolgt durch eine mittig oberhalb der Fahrbahn 1 verlaufende Schleifleitung 6, mit der der Wagen 2 über einen Stromabnehmer 7 Verbindung hat.

Die Figur 2 läßt erkennen, daß die Fahrbahn 1 rinnenartig gewölbt ist. Zu sehen ist weiterhin, daß die Schleifleitung 6 in einer elektrisch isolierenden, nach unten hin nur durch einen Schlitz 8 offenen Schiene 9 verläuft. Die Schiene 9 wird von schräg nach unten führenden Stützen 10, 11 getragen.

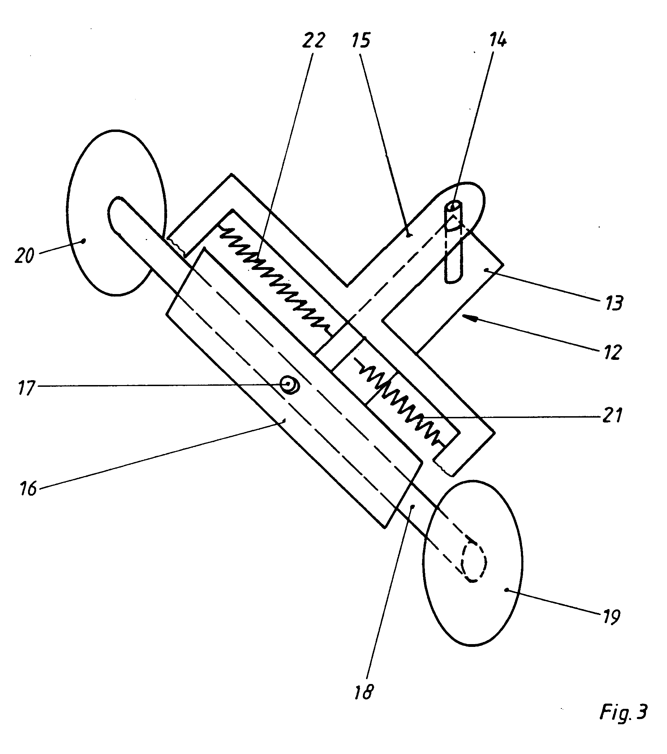

Wichtig für die Erfindung ist das Prinzip des selbsttätigen Lenkens der Vorderachse des Wagens 2. Dieses ergibt sich am besten aus der Figur 3.

Die Figur 3 zeigt einen T-förmig ausgebildeten Drehschemel 12. Dieser hat an einem nach vorn gerichteten Steg 13 eine in etwa senkrecht ausgerichtete oder leicht geneigte Drehachse 14, über die sie schwenkbar mit einem Bereich eines Fahrzeugrahmens 15 verbunden ist. Am der Drehachse 14 gegenüberliegenden Ende hat der Drehschemel 12 eine quer zum Steg 13 ausgerichtete Platte 16, die schräg von vorn oben nach hinten unten gekippt verläuft. Mittig auf der Platte 16 ist ein Achsbolzen 17 rechtwinklig zur Platte 16 befestigt, der entsprechend der Neigung der Platte 16 von oben schräg nach vorn zum Boden hin ausgerichtet ist. Auf diesem Achsbolzen 17 ist ein starrer Achskörper 18 schwenkbar gelagert, der gegen die Platte 16 anliegt und an seinen freien Enden jeweils ein Vorderrad 19, 20 trägt.

Der Drehschemel 12 wird durch zwei als Zugfedern ausgebildete Federn 21, 22 in Geradeausstellung vorgespannt. Hierzu ist jede der Zugfedern 21, 22 einerseits am Fahrzeugrahmen 15, andererseits am Steg 13 befestigt.

Wenn beispielsweise bei Kurvenfahrt das linke Vorderrad 20 angehoben wird, dann schwenkt der Achskörper 18 um den Achsbolzen 17. Aufgrund seines schrägen Verlaufs führt das zu einem Lenkeinschlag der Vorderachse nach rechts. Der Wagen lenkt deshalb immer in Richtung eines Gefälles und dadurch zwangsläufig in eine Kurve hinein. Eine vergleichbare Lenkbewegung tritt bei einer Schräglage des Wagens 1 auch dadurch ein, daß sich aufgrund seines Gewichtes der Wagen mit dem Fahrzeugrahmen 15 und damit auch der Drehachse 14 in Richtung der Neigung des Gefälles verschiebt. Das führt zu einem Lenkeinschlag des Drehschemels 12 im Uhrzeigersinn, wenn sich der Fahrzeugrahmen in der Figur 3 gesehen nach rechts verschiebt.

### Auflistung der verwendeten Bezugszeichen

- 1: Fahrbahn
- 2: Wagen
- 3: Sitz
- 4: Elektromotor
- 5: Hinterrad
- 6: Schleifleitung
- 7: Stromabnehmer
- 8: Schlitz
- 9: Schiene
- 10: Stütze
- 11: Stütze
- 12: Drehschemel
- 13: Steg
- 14: Drehachse
- 15: Fahrzeugrahmen
- 16: Platte
- 17: Achsbolzen
- 18: Achskörper
- 19: Vorderrad
- 20: Vorderrad
- 21: Feder
- 22: Feder

## Patentansprüche

1. Freizeitanlage mit zumindest einem auf einer Fahrbahn (1) fahrbaren, vierrädrigen, von einem Elektromotor (4) angetriebenen Wagen (2), bei dem zur Energieversorgung des Elektromotors (4) der Wagen (2) über einen Stromabnehmer (7) mit einer entlang der Fahrbahn (1) verlaufenden, elektrischen Schleifleitung (6) verbunden ist, **dadurch gekennzeichnet**, daß die Fahrbahn (1) muldenförmig ausgebildet ist und die Vorderachse des Wagens (1) einen um eine auf der Fahrzeugmittellinie angeordnete, zumindest in etwa senkrecht ausgerichtete Drehachse (14) schwenkbaren Drehschemel (12) hat, an dessen äußeren Enden jeweils ein Vorderrad (19, 20) befestigt ist und dessen Drehachse (14) gegenüber den Vorderrädern (19, 20) nach vorn versetzt ist.

2. Freizeitanlage nach Anspruch 1, **dadurch gekennzeichnet**, daß der Drehschemel (12) durch zumindest eine Feder (21, 22) in eine Geradeausfahrt herbeiführende Mittellage vorgespannt ist.

3. Freizeitanlage nach den Ansprüchen 1 oder 2, **dadurch gekennzeichnet**, daß der Drehschemel (12) T-förmig ausgebildet ist und von seinem Steg (13) hinter der Drehachse (14) eine Zugfeder (Federn 21, 22) zu einem festen Punkt in der Nähe der Fahrzeugmittellinie führt.

4. Freizeitanlage nach zumindest einem der vorangehenden Ansprüche, **dadurch gekennzeichnet**, daß die Vorderachse einen starren, die beiden Vorderräder (19, 20) tragenden Achskörper (18) hat, welcher schwenkbar auf einem auf der Fahrzeugmittellinie schräg angeordneten Achsbolzen (17) befestigt ist, welcher in Bezug auf eine Senkrechte mit seinem oberen Ende nach rückwärts geneigt verläuft, und daß der Achsbolzen (17) mit dem Achskörper (18) räumlich hinter der Drehachse (14) an dem Drehschemel (12) befestigt ist.

## Claims

1. Amusement device with at least one four-wheeled car (2), which is capable of travelling on a roadway (1), is driven by an electric motor (4) and in which, for the supply of energy to the electric motor (4), the car (2) is connected via a collector (7) to an electric contact line (6) extending along the roadway (1), characterised in that the roadway (1) is trough-shaped in design and the front axle of the car (1) has a bogie (12) which is pivotal round a pivot shaft (14) arranged on the centre line of the vehicle and orientated at least substantially vertically, a respective front wheel (19, 20) being fastened on the outer ends of the bogie and the pivot shaft (14) of the bogie being offset forwardly relative to the front wheels (19, 20).

2. Amusement device according to claim 1, characterised in that the bogie (12) is pretensioned by at least one spring (21, 22) into a central position which generates straight travel.

3. Amusement device according to claims 1 or 2, characterised in that the bogie (12) is T-shaped in design and, from its web (13) behind the pivot shaft (14), guides a tension spring (springs 21, 22) to a fixed point in the vicinity of the centre line of the vehicle.

4. Amusement device according to at least one of the preceding claims, characterised in that the front axle has a rigid axle member (18) which carries the two front wheels (19, 20) and is pivotally fastened on a journal (17) arranged obliquely on the centre line of the vehicle, the journal (17) extending backwardly at an inclination with its upper end with respect to a vertical line, and in that the journal (17) with the axle member (18) is fastened on the bogie (12) spatially behind the pivot shaft (14).

## Revendications

1. Installation pour distractions publiques comportant au moins un véhicule (2) à quatre roues apte à rouler sur une piste et entraîné par un moteur électrique, véhicule relié au moyen d'un pantographe (7) à une ligne de contact (6) disposée le long de la piste afin d'alimenter en énergie le moteur électrique, caractérisée en ce que la piste (1) est en forme de cuvette et en ce que l'axe avant du véhicule présente une sellette pivotante (12) apte à basculer autour d'un axe de rotation (14) disposé selon au moins une direction sensiblement perpendiculaire à la ligne médiane du véhicule, à chacune des extrémités de laquelle est fixée une roue avant (19,20), et dont l'axe de rotation (14) est disposé en face des roues avant (19,20) et vers l'avant.

2. Installation selon la revendication 1, caractérisée en ce que la sellette (12) est attelée dans une position médiane et rectiligne au moyen de au moins un ressort (21,22).

3. Installation selon l'une des revendications 1 ou 2, caractérisée en ce que la sellette (12) est conformé en T et dirige un ressort de traction (21,22) de son chevalet (13) à l'arrière de l'axe de rotation (14) vers un point fixe de la région de la ligne médiane du véhicule.

4. Installation selon au moins l'une des revendications précédentes, caractérisé en ce que l'axe avant comporte un arbre (18) rigide portant les deux roues avant (19,20), lequel est monté de façon basculante sur un pivot (17) disposé obliquement sur la ligne médiane du véhicule, lequel est dirigé vers l'arrière relativement à une direction oblique, et en ce que le pivot (17) est maintenu sur l'axe (18) à l'arrière de l'axe (14) de la sellette (12).
